(19) Europäisches Patentamt
European Patent Office
Office européen des brevets

(11) Publication number: **0 105 325**
**B1**

(12) **EUROPEAN PATENT SPECIFICATION**

(45) Date of publication of patent specification: **19.11.87**

(51) Int. Cl.[4]: **C 03 B 37/018,** C 03 C 25/02, G 02 B 6/10

(21) Application number: **83901459.4**

(22) Date of filing: **14.03.83**

(86) International application number: **PCT/US83/00334**

(87) International publication number: **WO 83/03599 27.10.83 Gazette 83/25**

# (54) DOPED OPTICAL FIBER.

(30) Priority: **09.04.82 US 367091**

(43) Date of publication of application: **18.04.84 Bulletin 84/16**

(45) Publication of the grant of the patent: **19.11.87 Bulletin 87/47**

(84) Designated Contracting States: **BE DE FR NL**

(56) References cited:
**GB-A-1 049 586**
**JP-A-53 003 352**
**US-A-3 841 882**
**US-A-3 853 384**
**US-A-4 217 027**
**US-A-4 262 131**
**US-E- 28 029**

**Proceedings of the IEE, Issued July 1966, Vol. 113, No. 7, K.C. KAO et al, Dielectric-Fibre Surface Waveguides for Optical Frequencies, pp. 1151-1158.**

(73) Proprietor: **Western Electric Company, Incorporated**
**222 Broadway**
**New York, NY 10038 (US)**

(72) Inventor: **MacCHESNEY, John Burnette**
**RD No. 1**
**Lebanon, NJ 08833 (US)**
Inventor: **SIMPSON, Jay Richard**
**8 Robin Road**
**Fanwood, NJ 07023 (US)**
Inventor: **WALKER, Kenneth Lee**
**1003 Central Avenue**
**New Providence, NJ 07974 (US)**

(74) Representative: **Blumbach Weser Bergen Kramer Zwirner Hoffmann Patentanwälte**
**Radeckestrasse 43**
**D-8000 München 60 (DE)**

(56) *References cited:*
**Journal of the American Ceramic Society, Issued January 1969, Vol. 52, No. 1, J.F. MacDowell et al, Immiscibility and Crystallization in AL2O3-SiO2 Glasses, pp. 17-25.**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 105 325 B1**

(56) References cited:

Journal of the American Ceramic Society, Issued November 1970, Vol. 53, No. 11, H.S. Parker et al, Vapor Growth of A12O3 Bicrystals, p. 583.

Journal of the American Ceramic Society, Issued November 1970, Vol. 53, No. 11, P. Wong et al, Chemical Vapor Deposition of Polycrystalline A12O3, pp. 617-621.

Electronics Letters, Issued 03 October 1974, Vol. 10, No. 20, S. Kobayashi et al, Low-Loss Optical Glass Fibre with A12O3-SiO2 Core, pp. 410-411

Journal of the American Ceramic Society, Issued September-October 1975, Vol. 58, No. 9-10, K. Nassau et al, Preparation and Properties of Fused Silica Containing Alumina, p. 461.

**Description**

Field of the invention

This invention involves optical fiber transmission lines based upon the silica glass system according to the preamble clause of claim 1. Such a fiber is known from US—A—38 53 384. In such fibers either the core, the cladding, or both, have an index of refraction different from that of pure silica as a result of the addition of an appropriate dopant.

The invention refers also to a fabrication method for such fibers, according to the preamble clause of claim 5. Such a method is known from US—A—42 17 027.

Background of the invention

Over the past decade the suggestion of Kao and Hockham (*Proceedings of IEE*, Vol. 113, No. 7, July 1966, p. 1151) that silica would constitute an appropriate transmission medium for low loss optical fibers has been widely realized. Optical fibers are now routinely fabricated on a commercial basis with losses less than 1 dB/km in at least part of the optical region of the spectrum, generally extending from 0.7 to 1.7 micrometers. The fibers comprise a core and a cladding, with the cladding having an index of refraction lower, at least in part, than that of an index of refraction associated with the core. Both multi-mode fibers and single-mode fibers are routinely fabricated using various design parameters, such as appropriate gradations in index of refraction to obtain desirable characteristics, such as high bandwidth.

Dopants which are used include germania, an index raising dopant, which is the principal and most widely used dopant, as well as other minor dopants, such as phosphorus, and other index raising dopant, and fluorine, and boron, index lowering dopants. In addition, boron and phosphorus are used to improve processing characteristics, such as those associated with sintering. Recently, boron has been less widely used because of its infrared absorption band which appears in the spectral range of interest. Where long wavelength transmission is of interest, boron is usually replaced with fluorine, which, like boron, lowers the index of refraction of silica glass systems, but which has a longer wavelength infrared absorption band.

Germania, currently the principal dopant used in optical fibers to increase the index of refraction of silica, has been widely used over the past decade, almost to the exclusion of all other index raising dopants; this, despite the fact that germania has significant economic and technical drawbacks, including high cost, scarcity, a tendency to only partially react to form particulate material, and relatively high volatility with a resultant tendency to "burnoff" during high temperature processing. Furthermore, acceptable incorporation of germania in silica requires a high concentration of oxygen in the reaction atmosphere (many times stoichiometry) which in many processes results in an extended deposition region and a resultant deleterious taper in the deposit. Additionally, in order to remove trace amounts of hydroxyl impurities, it is advantageous to have a high chlorine-to-oxygen ratio in the reaction environment; however, this tends to further degrade the efficiency of germania incorporation. Despite these drawbacks, germania remains the preferred index raising dopant, and essentially the only one in commercial use, primarily because no acceptable alternate dopant has been effectively developed.

The literature is replete with suggestions of various dopants for use in the fabrication of optical fibers. Generally, these disclosures are in the form of a listing of a large number of possible dopants with the suggestion that combinations of the dopants may also be used. (See, for example, US—A—4,157,790, column 5, lines 1—6. "Many suitable materials have been used as a dopant alone or in combination with each other to increase the refractive index of fused silica. These include, but are not limited to titanium oxide, tantalum oxide, aluminum oxide, lanthanum oxide, phosphorus oxide and germanium oxide"). The use of alumina as a dopant has been specifically investigated (S. Kobayashi et al, *Electronics Letters*, Vol. 10, No. 20, p. 410, 1974). Such work, however, has generally involved low concentrations of alumina dopant. The use of higher concentrations of alumina generally results in devitrification (J. F. MacDowell and G. H. Beall, *Journal of the American Ceramics Society*, Vol. 52, p. 17, January 1969), and hence is discouraged.

Summary of the invention

It has been found that there is a proclivity to devitrification of the glass composition associated with the core of an optical fiber of the type as defined in the preamble clause of claim 1. Said proclivity to devitrification, being present during sintering steps to be applied in the course of the optical fiber production, is predominantly induced by the presence of a nonglass forming refractory oxide in at least the core glass.

Thus, the problem to be solved is to retard said tendency to devitrify.

In accordance with the invention this problem is solved with the features of the characterizing clause of claim 1.

Accordingly, at least the fiber core which comprises silica in an amount of more than 80 weight percent, at least one glass forming dopant, and a nonglass forming refractory oxide in an amount of more than 5 mole percent contains $P_2O_5$ as one of said glass forming dopants.

The refractory oxide is substantially stable relative to its halide vapor species at typical deposition temperatures used in fiber fabrication, as well as relative to its suboxides at subsequent processing temperatures, such as for example at collapse temperatures used in MCVD. Exemplary nonglass forming

refractory oxides appropriate for the practice of this invention include alumina and zirconia. In the practice of this invention alumina has been incorporated in silica fibers at dopant levels even greater than 5, 7, or 10 mole percent without deleterious devitrification. Such high concentrations of nonglass forming dopants are possible by incorporating $P_2O_5$, to retard devitrification.

A fabrication process for the above optical fiber transmission line which does not require that the doped silica be subjected to extended sintering emperature-time periods to form the glass state additionally facilitates a devitrification suppression. Such a process is defined in claim 5. It is the MCVD process where deposited particulate material is sintered to a clear glass by means of a passing hot zone. This is to be compared with various forms of the flame hydrolysis process which are applied to fiber fabrication to yield a porous particulate body which is then sintered to a clear glass over relatively long periods of time. In the various fiber fabrication processes which utilize hydrolysis, sintering occurs over temperature-time periods long compared to the temperature-time period over which devitrification may occur, thereby allowing the doped silica to devitrify, unless as has been found by the invention, $P_2O_5$ is incorporated as a glass forming dopant.

In at least the case of alumina is zirconia, a doped halide precursor vapor may be conveniently formed by passing high purity halogen vapor, such as chlorine, over high purity aluminum or zirconia wire advantageously heated in an appropriate vessel. The halide precursor vapor may be diluted, for example, by helium, to provide a mixture dew point high enough so that the mixture may be delivered without condensation. In an exemplary embodiment, the mixture was delivered, along with other precursor vapors such as silicon tetrachloride and oxygen, to an MCVD fabrication apparatus where appropriate deposition, and subsequent fiber fabrication, occurred.

## Brief description of the drawing

Fig. 1 is a schematic representation of the inventive fiber.

Fig. 2 is a schematic representation of a reactor oven which may be used to form doped precursor vapor in the practice of this invention.

Fig. 3 is a schematic representation of an exemplary injector which may be used to deliver the reactant precursor vapor to a deposition apparatus without condensation.

Fig. 4 is a graphical representation of the loss values obtained in a fiber fabricated according to the teachings of this invention.

## Detailed description

The invention is a communications grade optical fiber (loss less than 2.5 dB/km over at least a portion of the optical region of the spectrum) comprising silica in an amount of more than 80 weight percent doped with more than 5 mole percent of a nonglass forming refractory oxide such as $Al_2O_3$ or $ZrO_2$, together with $P_2O_5$ to retard devitrification. The specific design of the fiber is determined by the requirement of the practitioner, but will usually include a cladding region of lower index of refraction and a central core region of higher index of refraction. The size of the various regions, as well as their relative index of refraction values and distributions or gradations, are determined by the particular application. As in the prior art, dopant oxides are used to alter the index of refraction of the silica-based fiber with a view toward obtaining requisite index of refraction values and/or gradations. Oxides used in this invention are substantially stable relative to their halide vapor species at temperatures necessary to form and deposit the oxides during fiber fabrication. Simultaneously, these oxides are substantially stable relative to their suboxides at subsequent processing temperatures, such as for example, collapse temperatures in MCVD.

The significance of this invention and the importance of the dopant's stability relative to its halide vapor species, as well as to its suboxides, may be understood by considering the various fabrication processes as well as the chemistry used to transform these vapor reactants to doped silica glass.

There are two major fiber fabrication processes currently in commercial practice. They are the MCVD process (US—A—4,217,027) developed by the Bell System and the Corning hydrolysis process (US—A—Re 28,029). The Corning process involves the formation of silica and/or doped silica particles using a hydrolysis burner (see, US—A—2,272,342 and US—A—2,326,059), and the subsequent deposition of these particles on an appropriate mandrel to obtain a porous tubular body which is subsequently sintered to a clear glass tube from which the fiber is drawn.

The MCVD process involves flowing appropriate glass precursor reactants through a glass tube which is traversed by an appropriate hot zone. In commercial embodiments, the hot zone serves the dual purpose of a) stimulating reaction of the glass precursor vapors to form glass particulate material which generally deposits downstream of the hot zone, and b) simultaneously sintering previously deposited particulate material to a unitary glass layer. In commercial practice, subsequent to deposition, the tube is collapsed to a rod from which the fiber is drawn.

For the purposes of this invention, a distinction of significance between the Corning hydrolysis process and the Bell MCVD process is the time-temperature period necessary for sintering. Since the Corning process deals with a macroscopic porous particulate body which must be sintered, the temperature-time period for sintering is relatively long. In the MCVD process, however, sintering generally occurs layer by layer and is effected by means of the passing hot zone which traverses at rates generally greater than 1 or 2 cm per minute. This results in a relatively short temperature-time period for sintering. The significance of

this distinction arises because of the tendency of the nonglass forming refractory oxides to crystallize if given sufficient time, at sufficiently elevated temperatures, to equilibrate. In the MCVD process where the temperature-time period for sintering is short, the nonglass forming refractory oxide is essentially quenched in the glass state. In the Corning hydrolysis process, however, where the temperature-time period for sintering is relatively long, equilibration may result in devitrification of the nonglass former to a crystal. This proclivity of the oxide to devitrify is exacerbated by the fact that it is a nonglass former and tends to devitrify if given the thermodynamic opportunity. Therefore, according to the invention, $P_2O_5$ is incorporated as additional glass former which retards the tendency to devitrify.

Consideration of the chemistry which occurs during glass formation gives the practitioner an appreciation for the significance of the dopant's stability relative to its halide vapor species, as well as relative to its suboxides. In generic form, the relevant reaction is

$$A_xH_y+O_2 \rightleftarrows A_uO_v+cH_z$$

where "A" is silicon or an appropriate dopant, such as phosphorus, germanium, aluminum, zirconium, etc., "H" is an appropriate halogen, such as, for example, chlorine and "c" is a constant. Table I presents order of magnitude estimates of the ratios of equilibrium partial pressures of the halides to the initial partial pressures of the reactants. This represents the fraction of halide which remains unreacted at equilibrium. In Table I, equilibria are compared at typical deposition temperatures for the MCVD process, e.g., 1800 degrees Kelvin. The Table shows that only one in $10^6$ parts of silicon tetrachloride remains unreacted in the MCVD process, consistent with measured observations that silicon tetrachloride is completely reacted in MCVD. Germania tetrachloride, on the other hand, remains 70 percent unreacted. This, too, is consistent with observations which indicate that germanium oxide is difficult to incorporate into the silica glass during fiber fabrication. Furthermore, germania incorporation becomes very sensitive to temperature resulting in a layer structure deleterious to the resultant bandwidth of the optical fiber. Table I shows, however, that zirconia tetrachloride and aluminum trichloride, behaving much like phosphorus oxychloride, are essentially entirely reacted during MCVD chemistry (less than 5 parts in $10^5$ unreacted). The results of Table I show that alumina and zirconia, as well as $P_2O_5$, may be easily incorporated into silica glass.

TABLE I
Equilibrium between chloride and oxide of MCVD reactants at 1800°K

| Reaction | $\frac{P^{MCl_4}\text{(Equilibrium partial pressure)}}{p^{o\ MCl_4}\text{(Initial partial pressure)}}$ — Ratio |
|---|---|
| $SiCl_4+O_2 \rightleftarrows SiO_2+2Cl_2$ | $1\times10^{-6}$ |
| $GeCl_4+O_2 \rightleftarrows GeO_2+2Cl_2$ | $7\times10^{-1}$ |
| $2POCl_3+3/2\ O_2 \rightleftarrows P_2O_5+3Cl_2$ | $4\times10^{-5}$ |
| $2AlCl_3+3/2\ O_2 \rightleftarrows Al_2O_3+3Cl_2$ | $3\times10^{-5}$ |
| $ZrCl_4+O_2 \rightleftarrows ZrO_2+2Cl_2$ | $3\times10^{-9}$ |

The stability of the oxide to its suboxide species during subsequent processing at elevated temperatures is a measure of the tendency of the oxide to vaporize as a suboxide, for example, during the collapse step in MCVD. In Table II, the equilibrium partial pressures of particular suboxides are compared for a number of oxides used in fiber fabrication. As can be seen from the Table, the partial pressure of germanium oxide is high. Hence, the equilibrium between $GeO_2$ and GeO at high temperatures, such as those encountered in the MCVD collapse step, favor the vaporization of $GeO_2$ as GeO, a reaction referred to as "burnoff" and resulting in an index dip in the resultant fiber. This index dip is believed to be a cause of bandwidth loss. Table II, however, shows that both aluminum oxide and zirconium oxide have very little tendency to vaporize as suboxides, [suboxide partial pressure less than $5.07\times10^{-4}$ Pa. ($5\times10^{-9}$ atm.)] and hence will show little, if any, "burnoff" tendencies.

TABLE II
Equilibrium of the oxide with the suboxide

| Reaction | Equilibrium partial pressure of the suboxide ($P_{O_2}$=1.0 atm.) 2300°K Pa. | (atm.) | Oxide activity (x) |
|---|---|---|---|
| $SiO_2 \rightleftarrows SiO+1/2\ O_2$ | 1.01 | $(1\times10^{-5})$ | 0.9 |
| $GeO_2 \rightleftarrows GeO+1/2\ O_2$ | $1.01\times10^{6}$ | $(1\times10^{1})$ | 0.1 |
| $P_2O_5 \rightleftarrows 2PO+3/2\ O_2$ | $5.07\times10^{-4}$ | $(5\times10^{-9})$ | 0.05 |
| $P_2O_5 \rightleftarrows P_2O_3+O_2$ | $1.01\times10^{4}$ | $(1\times10^{-1})$ | 0.05 |
| $P_2O_5 \rightleftarrows 2PO+1/2\ O_2$ | $2.03\times10^{-1}$ | $(2\times10^{-6})$ | 0.05 |
| $Al_2O_3 \rightleftarrows Al_2O+O_2$ | $7.09\times10^{-12}$ | $(7\times10^{-17})$ | 0.1 |
| $Al_2O_3 \rightleftarrows 2AlO+1/2\ O_2$ | $4.05\times10^{-4}$ | $(4\times10^{-4})$ | 0.1 |
| $Al_2O_3 \rightleftarrows Al_2O_2+1/2\ O_2$ | $2.03\times10^{-10}$ | $(2\times10^{-15})$ | 0.1 |
| $ZrO_2 \rightleftarrows ZrO+1/2\ O_2$ | $2.03\times10^{-9}$ | $(2\times10^{-14})$ | 0.1 |
| $B_2O_3 \rightleftarrows B_2O_2+3/2\ O_2$ | $5.07\times10^{-1}$ | $(5\times10^{-6})$ | 0.1 |
| $B_2O_3 \rightleftarrows 2BO+1/2\ O_2$ | 5.07 | $(5\times10^{-5})$ | 0.1 |

The Figures will be helpful in discussing the particular embodiment described in the Example. In Fig. 1 a fiber fabricated according to the teachings of this invention is shown. In this Example, 11 is the fiber core comprising silica doped with appropriate nonglass forming refractory oxides, including alumina and/or zirconia, and 12 is the fiber cladding which may be pure silica or silica doped with dopants disclosed here, or common to those skilled in the art.

Proper formation of dopant precursor vapor yields superior fiber transmission characteristics. For example, while alumina trichloride is available as a powder over which oxygen may be flowed to yield alumina trichloride vapor in oxygen, the aluminum trichloride powder is relatively impure. While silicon and germania trichloride have been used in conjunction with oxygen carrier gas to yield appropriate vapor, the high vapor pressure of these constituents results in the separation of contaminants which are left behind, due to their low vapor pressure. However, the low vapor pressure of aluminum trichloride does not allow for this inherent purification phenomenon. Trimethylalumina, which has a higher vapor pressure has been considered but results in deleterious contamination because of hydroxyl formation, not to mention its tendency to explode upon contact with oxygen. Additionally, aluminum trichloride tends to dimerize with contaminants further exacerbating the contaminant problem.

To alleviate contamination, and unlike previous fiber fabrication chemistry, which involved the direct formation of a reactant vapor, such as $SiCl_4$, the present process involves, in a sense, a two-step chemistry. First, formation of appropriate reactant by passing chlorine over aluminum, and then reaction with oxygen to form an appropriate silica-based glass (see, for example, K. Nassau et al, *Journal of the American Ceramics Society*, Vol. 58, p. 461, (1975), H. S. Parker and C. A. Harding, *Journal of the American Ceramics Society*, Vol. 53, p. 583, November 1970, and P. Wong and M. Robinson, *Journal of the American Ceramics Society*, Vol. 53, p. 617, November 1970).

Fig. 2 is a reactor oven which may be used to form an aluminum or zirconium halide precursor reactant for delivery, for example to an MCVD apparatus. In Fig. 2, 21 is a Pyrex vessel. Chlorine, as well as any diluents which may be used, such as helium, enter the reactor oven through 22, pass through a tube, 23, through fritted glass, 24, and over aluminum or zirconium wire, 25. The vessel may be heated with tape, 26, or in a furnace, and insulated with vermiculite insulation, 27. The resultant aluminum chloride, and any diluent which may be used, exit through 28 and are then transmitted to a reactant injector which is heated to prevent condensation.

The reactant injector is shown in Fig. 3 where the aluminum halide and associated diluents enter through 31. Other reactants such as silicon tetrachloride, $POCl_3$ and oxygen enter through 32. The two different groups of reactants are shown separated to prevent premature reaction. Heating tape, 33, surrounds the injector through which the aluminum halide is passed to prevent condensation. 34 is a

rotating seal comprising a stationary part, 35, and a rotating part, 36. Purge gas is passed through the stationary part at 37 to prevent contamination of the reactant gas with ambient air. 38 is the downstream lathe head stock and chucks used in the MCVD process, and 39 is an appropriate ribbon burner. 40 is an exemplary 16 millimeter O.D. tube used to feed reactant gas to the reaction tube, and 41 is the MCVD substrate tube, in the particular embodiment discussed below, a silica tube of 19 mm I.D.×25 mm O.D. dimension.

Fig. 4 is a loss diagram for exemplary fibers fabricated according to the teachings of this invention.

Example

Optical fiber preforms were made using a standard MCVD lathe and delivery system with the addition of an $AlCl_3$ generator (Fig. 2) and a hot reactant injector (Fig. 3). Pure $AlCl_3$ was generated by passing high purity chlorine (Airco research grade) over Marz grade aluminum wire (5—9's containing transition metals at less than 1 ppm) heated to 300 degrees Celsius in a Pyrex vessel (21 in Fig. 2). The chlorine flow was controlled from 5 to 100 cc/min to regulate the amount of $AlCl_3$ generated and was diluted by 300 cc/min of helium to provide a mixture dew point high enough to be delivered by the injection tube heated to 200 degrees Celsius. The hot injection system (Fig. 3), designed around a rotating Teflon seal provided the heated line necessary to deliver the $AlCl_3$-He mixture to a region near the upstream turnaround point of the deposition torch. It is advantageous to deliver the $AlCl_3$ separately from the $POCl_3$, $SiCl_4$ and $O_2$ to avoid clogging of the lines where the chlorides mix and to prevent a particulate deposit upstream. When formed, this has a tendency to detach during deposition causing an inhomogeneous deposit downstream.

Deposition was carried out in waveguide grade 19 mm I.D.×25 mm O.D. silica tubes using a single water-cooled torch for deposition and collapse. Deposit conditions are outlined in Table III.

TABLE III
Deposition conditions
Substrate tube 16×19 mm Hereaus TO8
Atlanta type oxy-hydrogen torch
Torch traverse 18 cm/min

| | | |
|---|---|---|
| Barrier | 5 passes | deposit temp. 1760°C |
| | $SiCl_4$ | 1.3 grams/min. |
| | $BCl_3$ | 10.0 cc/min. |
| | Total $O_2$ | 2150 cc/min. |
| | He | 200 cc/min. |
| Core | 10 passes | deposit temp. 1700—1740°C |
| | $SiCl_4$ | 1.3 grams/min. |
| | $POCl_3$ | 0.0065 grams/min. |
| | Total $O_2$ | 2250 cc/min. |

$AlCl_3$ generator

Temperature 150°C; Chlorine 10—50 cc/min; 5 cc/min. increment/pass; Helium 300 cc/min.

Before each deposition run, reaction of the aluminum wire (heated to 300 degrees Celsius) was initiated by passing chlorine and helium over it until a visible amount of $AlCl_3$ could be condensed inside the substrate tube. The condensed $AlCl_3$ was then sublimed while helium continued to purge the generator. We believe this practice prepared the surface of the aluminum wire in the generator to allow controlled delivery of $AlCl_3$ when required. Deposition of a $B_2O_3$—$SiO_2$ barrier and a $Al_2O_3$—$P_2O_5$—$SiO_2$ core proceeded much the same as usual. During collapse, however, the low viscosity of the core composition required that considerable back pressure be applied to ensure a circular core.

The attenuation of two $Al_2O_3$—$P_2O_5$—$SiO_2$ core fibers are presented in Fig. 4. These fibers had numerical apertures of 0.16 and 0.27 and minimum losses of 2 dB/km and 8 dB/km at 1.15 μm respectively. We attribute these losses, lower than previously reported work, to the purity of the $AlCl_3$ generated by the reaction/injection method and the reduced tendency of the ternary $Al_2O_3$—$P_2O_5$—$SiO_2$ glass system to devitrify. The higher the doping level the greater the tendency to devitrify, and consequently greater quenching and/or addition of more third component, such as $P_2O_5$ is necessary. Applicants find that the inclusion of phosphorus suppresses the tendency of the alumina deposited silica glass to devitrify. Although the inclusion of phosphorus tends to lower the viscosity of the resultant melt and hence would tend to indicate more likely devitrification, applicants find less likelihood of devitrification. The

$P_2O_5$—$Al_2O_3$—$SiO_2$ system contains the phase ($AlPO_4$) which is an isomorph of silica. The incorporation of Al in the $AlPO_4$ groups effectively diminishes the tendency to form mullite crystals which are thought to be responsible for devitrification.

Reduction of $OH^-$ concentrations to levels even below those typically observed in $GeO_2$—$SiO_2$ fibers is possible using this invention. As revealed by Table I the oxide of aluminum is more stable at deposition temperatures than $GeO_2$. Thus the reaction will even occur at increased $Cl_2$ levels leading to the possibility of adding more $Cl_2$ during deposition, or operation at reduced $O_2$ levels to yield very low OH fibers. This can potentially lead to yet lower levels of hydroxyl concentrations which are controlled by the reaction:

$$H_2O+Cl_2 \rightleftharpoons 2HCl+1/2\ O_2.$$

As revealed by Tables I and II the thermodynamic characteristics of zirconium oxide are even more favourable than those of aluminum oxide. We have made fibers using $ZrCl_4$ as the reactants, and the tendency to devitrify is greater than with alumina.

**Claims**

1. An optical fiber transmission line comprising a core (11) and a cladding (12), in which at least the core of the fiber comprises silica and at least one glass forming dopant, silica being present at least in said core in an amount of more than 80 weight percent and the core also comprising a nonglass forming refractory oxide in an amount of more than 5 mole percent, characterized in that one of said glass forming dopants is $P_2O_5$.

2. The fiber according to claim 1, characterized in that said nonglass forming oxide is selected from alumina and zirconia.

3. The fiber according to claim 2, characterized in that alumina is present in an amount of more than 7 mole percent.

4. The fiber according to claim 2, characterized in that alumina is present in an amount of more than 10 mole percent.

5. A process for fabrication of an optical fiber transmission line based on the silica glass system as claimed in any one of preceding claims 1—4, which process comprises the steps of producing an optical fiber preform by a vapor deposition technique, consolidating the preform into a glass rod and, immediately or eventually, drawing the preform into a fiber, said vapor deposition technique comprising

— introducing a moving stream of a vapor mixture including at least one compound glass-forming precursor and at least one dopant oxide-forming precursor together with an oxidizing medium into a tube while heating the tube so as to react the said mixture and produce a glassy deposit on the inner surface of the tube,
— heating the tube and contents by a moving hot zone produced by a correspondingly moving heat source external to the tube, the temperature within the hot zone, composition of the vapor mixture, and the rate of introduction of the vapor mixture being maintained at values such that at least a part of the reaction takes place within the gaseous mixture at a position spaced from the inner walls of the said tube thereby producing a suspension of oxidic reaction product particulate material, which deposits on the inner surface of the tube, and consolidating said particulate material to produce said glassy deposit on the inner surface of the tube, the vapor mixture containing, when forming the core material
— a silica forming precursor,
— a halide of a cation of a nonglass forming refractory oxide, and
— at least one glass forming dopant precursor

characterized in that, still when forming the core material,

— the silica forming precursor is present in an amount sufficient to result in more than 80 weight percent silica in at least the core,
— said halide is added in an amount sufficient to result in more than 5 mole percent of the nonglass forming oxide in the core, and
— one of said glass forming dopant precursors is a $P_2O_5$ forming precursor in an amount sufficient to result in a devitrification suppression.

6. A method according to claim 5, characterized in that the vapor mixture comprises aluminum or zirconium halide formed by passing a halogen over aluminum or zirconium wire.

**Patentansprüche**

1. Optische Faserübertragungsleitung mit einem Kern (11) und einem Mantel (12), wobei wenigstens der Kern der Faser Siliciumdioxid und wenigstens einen glasbildenden Dotierstoff enthält, das Siliciumdioxid in wenigstens dem Kern in einem Anteil von mehr als 80 Gew.-% vorhanden ist und der

Kern auch ein nichtglasbildendes feuerfestes Oxid in einem Anteil von mehr als 5 Mol-% enthält, dadurch gekennzeichnet, daß

—einer der glasbildenden Dotierstoffe $P_2O_5$ ist.

2. Faser nach Anspruch 1, dadurch gekennzeichnet, daß das nichtglasbildende Oxid von Aluminiumoxid und Zirkoniumoxid ausgewählt ist.

3. Faser nach Anspruch 2, dadurch gekennzeichnet, daß Aluminiumoxid in einem Anteil von mehr als 7 Mol-% vorhanden ist.

4. Faser nach Anspruch 2, dadurch gekennzeichnet, daß Aluminiumoxid in einem Anteil von mehr als 10 Mol-% vorhanden ist.

5. Verfahren zum Herstellen einer auf dem Siliciumdioxidglassystem beruhenden optischen Faserübertragungsleitung nach einem der vorstehenden Ansprüche 1 bis 4, mit den Schritten der Herstellung einer optischen Faservorform in einem Dampfniederschlagsverfahren, des Konsolidierens der Vorform in einen festen Glasstab und den unmittelbaren oder schließlichen Ziehens der Vorform in eine Faser, wobei das Dampfniederschlagsverfahren umfaßt

— Einführen eines strömenden Dampfgemischestroms mit wenigstens einem glasbildenden Verbindungsvorläufer und wenigstens einem oxidbildenden Dotierstoffvorläufer zusammen mit einem oxidierenden Medium in ein Rohr, während das Rohr erwärmt wird, um das Gemisch in Reaktion zu bringen und einen glasigen Niederschlag auf der Innenfläche des Rohrs zu erzeugen,
— Erwärmen des Rohrs nebst Inhalt durch eine wandernde heiße Zone, die durch eine entsprechend wandernde Heizquelle außerhalb des Rohrs erzeugt wird, wobei die Temperatur innerhalb der heißen Zone, die Zusammensetzung des Dampfgemischs und dessen Durchsatz auf Werten gehalten werden derart, daß wenigstens ein Teil der Reaktion innerhalb des gasförmigen Gemisches an einer von den Innenwänden des Rohrs entfernten Stelle stattfindet und dabei eine Suspension aus feinteiligem oxidischem Reaktionsproduktmaterial erzeugt wird, das sich auf der Innenfläche des Rohrs niederschlägt, und Konsolidieren des feinteiligen Materials zum Erhalt des glasigen Niederschlags auf der Innenfläche des Rohrs, wobei das Dampfgemisch bei der Bildung des Kernmaterials
— einen siliciumdioxidbildenden Vorläufer,
— ein Halogenid eines Kations eines nichtglasbildenden feuerfesten Oxides und
— wenigstens eine glasbildenden Dotierstoff-Vorläufer, enthalt,

dadurch gekennzeichnet, daß ebenfalls während der Erzeugung des Kernmaterials

— der siliciumdioxidbildende Vorläufer in einem Anteil vorhanden ist, der zum Erhalt von mehr als 80 Gew.-% Siliciumdioxid in wenigstens dem Kern ausreichend ist,
— das Halogenid in einem Anteil zugesetzt wird, der zum Erhalt von mehr als 5 Mol-% des nichtglasbildenden Oxids im Kern ausreichend ist, und
— einer der glasbildenden Dotierstoffvorläufer ein $P_2O_5$ bildender Vorläufer ist, und zwar in einem Anteil, der zum Erhalt einer Entglasungs-Unterdrückung ausreichend ist.

6. Verfahren nach Anspruch 5, dadurch gekennzeichnet, daß das Dampfgemisch Aluminium- oder Zirkoniumhalogenid enthält, das durch Leiten eines Halogens über Aluminium- oder Zirkoniumdraht erzeugt wird.

**Revendications**

1. Une ligne de transmission à fibre optique comprenant un coeur (11) et une gaine (12), dans laquelle le coeur au moins de la fibre comprend de la silice et au moins un dopant formant un verre, la silice étant présente au moins dans le coeur dans une proportion supérieure à 80% en poids, et le coeur comprenant également un oxyde réfractaire ne formant pas un verre, dans une proportion molaire de plus de 5%, caractérisée en ce que l'un des dopants formant un verre est $P_2O_5$.

2. La fibre selon la revendication 1, caractérisée en ce que l'oxyde ne formant pas un verre est sélectionné parmi l'alumine et l'oxyde de zirconium.

3. La fibre selon la revendication 2, caractérisée en ce que l'alumine est présente en un pourcentage molaire supérieur à 7%.

4. La fibre selon la revendication 2, caractérisée en ce que l'alumine est présente en un pourcentage molaire supérieur à 10%.

5. Un procédé pour la fabrication d'une ligne de transmission à fibre optique basée sur le système à base de verre de silice selon l'une quelconque des revendications 1—4 précédentes, ce procédé comprenant les opérations qui consistent à produire une préforme de fibre optique par une technique de dépôt en phase vapeur, à agglomérer la préforme pour donner un barreau de verre et à étirer immédiatement ou ultérieurement la préforme pour former une fibre, la technique de dépôt en phase vapeur comprenant:

— l'introduction dans un tube d'un écoulement d'un mélange de vapeurs comprenant au moins un

précurseur consistant en un composé de formation de verre et au moins un précurseur pour la formation d'un oxyde constituant un dopant, en compagnie d'un milieu oxydant, tout en chauffant le tube de façon à faire réagir le mélange et à produire un dépôt vitreux sur la surface intérieure du tube,

— le chauffage du tube et de son contenu au moyen d'une zone chaude mobile produite par une source de chaleur mobile de façon correspondante à l'extérieur du tube, la température dans la zone chaude, la composition du mélange de vapeurs et le débit d'introduction du mélange de vapeurs étant maintenus à des valeurs telles qu'une partie au moins de la réaction ait lieu dans le mélange gazeux à une position distante des parois intérieures du tube, de façon à produire une suspension de matière sous forme de particules consistant en produits de réaction contenant des oxydes, qui se dépose sur la surface intérieure du tube, et l'agglomération de cette matière sous forme de particules, pour produire le dépôt vitreux sur la surface intérieure du tube,

le mélange de vapeurs contenant, pendant la formation de la matière de coeur,

— un précurseur pour la formation de silice,
— un halogénure d'un cation d'un oxyde réfractaire ne formant pas un verre, et
— au moins un précurseur d'un dopant formant un verre caractérisée en ce que, toujours pendant la formation de la matière du coeur,
— le précurseur pour la formation de silice est présent en une quantité suffisante pour conduire à une proportion de silice supérieure à 80% en poids, au moins dans le coeur,
— l'halogénure est ajouté en quantité suffisante pour conduire à un pourcentage molaire supérieur à 5% de l'oxyde ne formant pas un verre, dans le coeur, et
— l'un des précurseurs de dopant formant un verre est un précurseur pour la formation de $P_2O_5$, présent en une quantité suffisante pour entraîner une suppression de la dévitrification.

6. Un procédé selon la revendication 5, caractérisé en ce que le mélange de vapeurs comprend un halogénure d'aluminium ou de zirconium formé par le passage d'un halogène sur un fil d'aluminium ou de zirconium.

FIG. 1

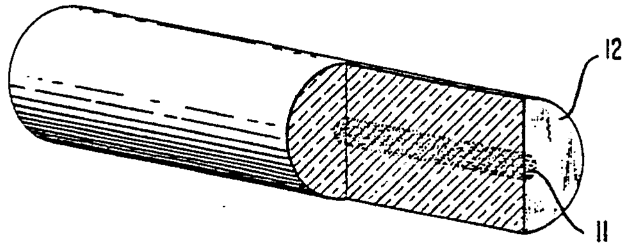


FIG. 2

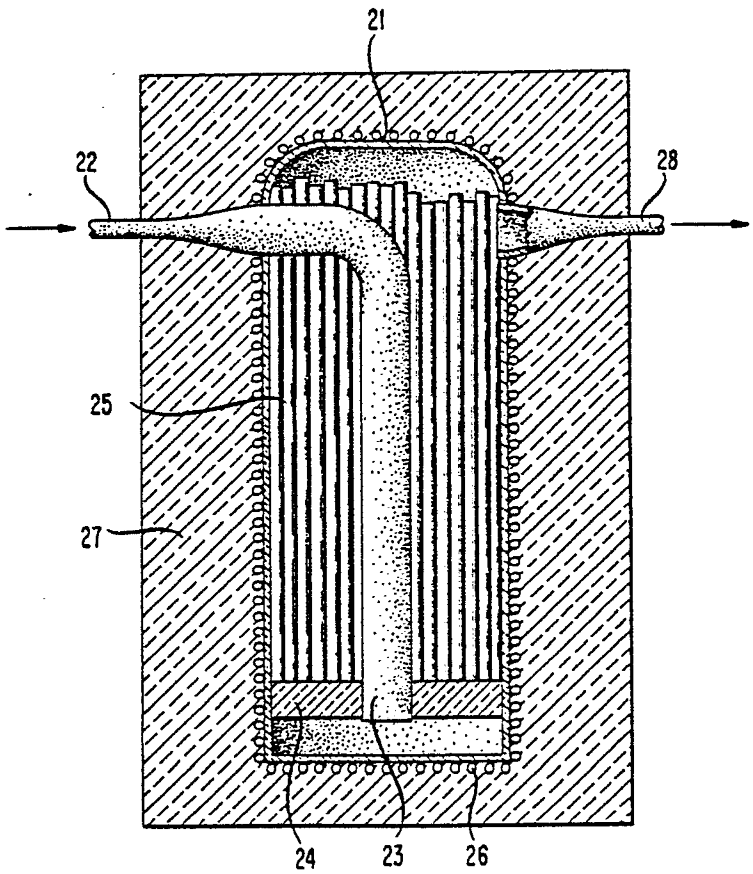

FIG. 3

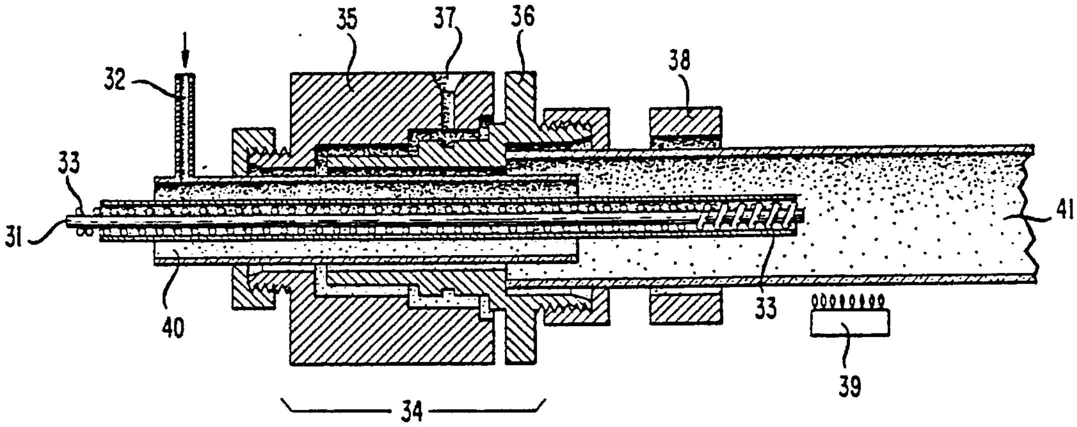
35
37
36
38
32
33
31
41
40
33
39
34

FIG. 4

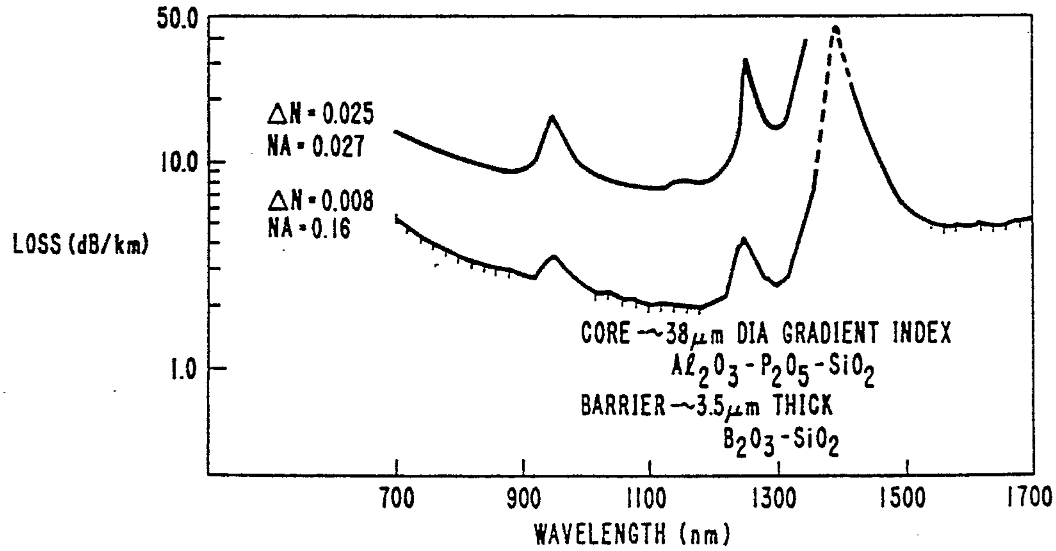
50.0
10.0
1.0
LOSS (dB/km)
ΔN = 0.025
NA = 0.027
ΔN = 0.008
NA = 0.16
CORE ~38μm DIA GRADIENT INDEX
$Al_2O_3$ - $P_2O_5$ - $SiO_2$
BARRIER ~3.5μm THICK
$B_2O_3$ - $SiO_2$
700
900
1100
1300
1500
1700
WAVELENGTH (nm)